Europäisches Patentamt

European Patent Office

Office européen des brevets

(11) Veröffentlichungsnummer: **0 045 946**
**B1**

## (12) EUROPÄISCHE PATENTSCHRIFT

(45) Veröffentlichungstag der Patentschrift:
25.01.84

(21) Anmeldenummer: 81106161.3

(22) Anmeldetag: 06.08.81

(51) Int. Cl.³: **F 24 C 3/00, B 60 H 1/22**

(54) **Raumheizgerät für Kleinräume.**

(30) Priorität: 07.08.80 DE 3029941

(43) Veröffentlichungstag der Anmeldung:
17.02.82 Patentblatt 82/7

(45) Bekanntmachung des Hinweises auf die Patenterteilung:
25.01.84 Patentblatt 84/4

(84) Benannte Vertragsstaaten:
AT BE CH FR GB IT LI NL SE

(56) Entgegenhaltungen:
US - A - 3 604 505

(73) Patentinhaber: Philipp Kreis GmbH & Co.
TRUMA-Gerätebau, Neumarkter Strasse 34-36,
D-8000 München 80 (DE)

(72) Erfinder: Kreis, Philipp, Neumarkter Strasse 34,
D-8000 München 80 (DE)

(74) Vertreter: Hain, Leonhard, Dipl.-Ing., Tal 18/IV,
D-8000 München 2 (DE)

Raumheizgerät für Kleinräume

Die Erfindung betrifft ein mit gasförmigem oder vergastem flüssigem Brennstoff befeuertes Raumheizgerät für Kleinräume, insbesondere für Wohnwagen, mit gegen den zu beheizenden Raum abgeschlossenem Verbrennungsraum, an den sich ein als Wärmetauscher ausgebildeter Verbrennungsgaskanal anschliesst, der vom Verbrennungsraum aufwärts führt, in einen waagrechten Querkanal übergeht und mit einem mäanderförmigen, abwärtsführenden Kanalteil endet, der mindestens einen zum Querkanal etwa parallel verlaufenden Unterkanal aufweist und an dessen Ende ein Austrittsstutzen ausgebildet ist.

Bei einem bekannten Raumheizgerät (DE-A 14 54 295) ist der Verbrennungsgaskanal in seiner ganzen Länge einzügig ausgeführt. Der mäanderförmig abwärtsführende Kanalteil aus mehreren abwechselnd senkrechten und waagrechten Abschnitten befindet sich unterhalb des im Querkanal liegenden Randbereiches, so dass der Querkanal eine grössere Erstreckung in Längsrichtung aufweist. Die Seitenwände des Verbrennungsgaskanales bilden parallele, jeweils in einer gemeinsamen Ebene liegende Flächen, die aussen in Strömungsrichtung der aufsteigenden Warmluft verlaufende Aussenlamellen sowie innen ebenfalls in Strömungsrichtung der Verbrennungsgase verlaufende Innenlamellen aufweisen. Das Heizgerät besteht aus zwei längs einer Mittelebene verbundenen Formschalen. Die oberen und unteren Begrenzungsflächen der Kanalabschnitte verlaufen zu den Seitenwänden senkrecht oder aus gusstechnischen Gründen leicht geneigt. Zur Vermeidung einer übermässigen Erhitzung des Querkanales wurde bei einem Heizgerät dieser Art (DE-A 20 16 560) die Decke des Querkanales auf seiner ganzen Länge satteldachförmig mit einer Steigung von mindestens 40% ausgebildet. Bei diesen bekannten Geräten wurden die Querschnitte der abwärtsführenden Kanalteile entweder allmählich oder stufenweise verengt. Dies ermöglicht zwar die Unterbringung von mehreren waagrechten und vertikalen Kanalabschnitten unterhalb des Querkanales und damit eine Verlängerung des Verbrennungsgaskanales, jedoch erfordert diese Bauweise einen grösseren Materialaufwand und Form- und Montagevorgänge, die die Herstellungskosten ungünstig beeinflussen. Ferner hat sich gezeigt, dass sich die Verbrennungsgasströmung durch einen schlangenförmig gewundenen Kanal empfindlich und störungsanfällig verhält.

Der Erfindung liegt daher die Aufgabe zugrunde, vor allem den abwärtsführenden Kanalteil eines Verbrennungsgaskanales zu vereinfachen und dabei seine Heizleistung noch zu verbessern.

Zur Lösung dieser Aufgabe ist ein Heizgerät der eingangs genannten Art gemäss der Erfindung dadurch gekennzeichnet, dass die Querschnittsfläche des Unterkanales gegenüber den Querschnittsflächen des Querkanals sowie des mäanderförmigen, abwärtsführenden Kanalteiles erheblich vergrössert ist.

In dem erweiterten Unterkanal kommt es zu einer Verlangsamung der Heizgasströmung und dadurch zu einer längeren Verweildauer, während der mehr Wärme abgegeben wird. Ein vergrösserter Unterkanal weist auch grössere Seitenwände, an denen die wärmeaufnehmende Raumluft hochsteigt, auf. Dies trifft vor allem dann zu, wenn die Seitenwände beiderseits des Kanales in einer Ebene liegen und sich eine Querschnittsvergrösserung nur in der Vergrösserung der Seitenflächen auswirkt. Diese Vergrösserung eines Unterkanales führt zu einer erhöhten Heizleistung, weshalb auf weitere waagrechte Kanalabschnitte verzichtet und direkt ein den Austrittsstutzen aufweisender Fallschacht angeschlossen werden kann. Hierdurch ergibt sich natürlich eine Vereinfachung in der Bauweise und eine spürbare Kostenminderung.

Zweckmässig weist der Unterkanal auf seiner ganzen Länge die gleiche Querschnittsform auf.

Wegen der starken Wärmeabgabe im Unterkanal wird auch das Volumen der Verbrennungsgase wesentlich verkleinert, weshalb der anschliessende Fallschacht einen erheblich kleineren Durchströmungsquerschnitt aufweisen kann.

Die Wirkung des Heizgerätes wird noch dadurch verbessert, dass die aneinandergrenzenden Kanalteile über wärmeleitende Zwischenstege, die vorzugsweise von Flanschfortsätzen zweier Formschalen, aus denen das Gerät besteht, gebildet sind, miteinander in Verbindung stehen. Auf diese Weise kommt es zu einem Wärmefluss von den heisseren Kanalabschnitten zu den weniger erwärmten und zu einer Verbesserung der Heizleistung. Überdies wirken auch die Zwischenstege wie Heizflächen.

Die Erfindung wird nachfolgend anhand eines Ausführungsbeispieles eines Heizgerätes mit einem Verbrennungsgaskanal mit abwärtsführenden Kanalteilen, welches auch in der Zeichnung schematisch dargestellt ist, näher beschrieben. Es zeigen:

Fig. 1 eine Seitenansicht und

Fig. 2 einen Schnitt nach der Linie II–II der Fig. 1.

Dieses Raumheizgerät umfasst einen Verbrennungsraum 1, in dem sich ein Brennersatz (nicht sichtbar) befindet. Durch ein Sichtfenster 2 können die Brennerflammen beobachtet werden. An den Verbrennungsraum schliesst sich ein aufwärtsführender Kanalteil 3 eines als Wärmetauscher dienenden Verbrennungsgaskanales an, der oben mittels eines Umlenkbogens 4 in einen waagrechten Querkanal 5 übergeht. Ein weiterer Umlenkbogen 6 führt in einen darunter ausgebildeten Unterkanal 8, an den sich ein abwärtsgerichteter Fallschacht 9 direkt anschliesst. Am Ende dieses Fallschachtes ist ein Austrittsstutzen 10 für einen Kaminanschluss vorgesehen.

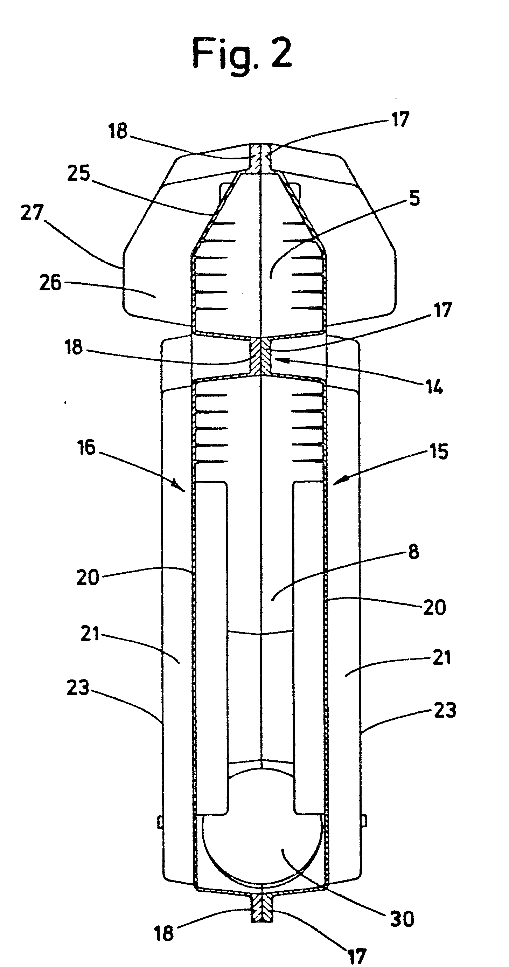

Dem dargestellten Heizgerät wird die Zukunft unterhalb des Brennersatzes durch einen Eintrittsstutzen 12, der unterhalb des Wohnraumes endet, zugeführt. Die aufsteigenden Verbrennungsgase gelangen nach dem Durchströmen des Verbrennungsgaskanales durch den Austrittsstutzen in einen Kaminschlauch (nicht gezeigt) und strömen meist über Dach aus. Die Strömungskanäle der aneinander angrenzenden Kanalabschnitte sind voneinander abgesetzt, so dass sich ihre Umfangswände nicht direkt berühren. Jedoch hat sich eine wärmeleitende Verbindung als zweckmässig erwiesen, die von einem Zwischensteg 14 geschaffen wird. Besteht das Gerät aus zwei Formschalen 15, 16 (Fig. 2), dann wird dieser Zwischensteg von Flanschfortsätzen 17, 18 gebildet.

Die Seitenwände 20 sämtlicher Kanalabschnitte des Verbrennungskanales sowie des Verbrennungsraumes 1 sind abgeflacht, und sie liegen jeweils in einer Ebene, so dass das Gerät durchgehend gleiche Breite aufweist. Aussen tragen die Seitenwände Aussenlamellen 21, die in Richtung der am Heizgerät hochsteigenden Warmluft verlaufen. Diese Aussenlamellen sind sowohl am aufsteigenden Verbrennungsgaskanal 3, im Querkanal 5 mit seinen Umlenkbögen 4 und 6 als auch am Unterkanal 8 und Fallschacht 9 ausgebildet. Aufeinander ausgerichtet bilden diese Lamellen Strömungsschächte 22 für die aufsteigende Luft. Die Aussenlamellen an den aufwärts- und abwärtsführenden Kanalteilen stehen mit ihren Aussenkanten 23 etwa 10 bis 15 mm von der Oberfläche der Seitenwände 20 ab. Der Querkanal 5 kann eine satteldachförmige Deckenfläche 25 aufweisen, deren Steigung etwa 45 bis 60% betragen kann. Schliesslich können an den Seitenwänden dieses Querkanales anstelle der üblichen Aussenlamellen auch Grossflächenlamellen 26 (Fig. 2) ausgebildet sein, deren Aussenkanten 27 wesentlich weiter als die Aussenkanten 23 nach aussen abstehen, zweckmässig um das Zwei- bis Dreifache. Auf diese Weise entstehen am Querkanal überstehende Auftriebsschächte für ausserhalb der unteren Aussenlamellen hochsteigende Luftströme, die noch nicht merklich erwärmt sind und daher zusätzlich vom Querkanal Wärme aufnehmen.

Die Querschnittsfläche B des Querkanales 5 ist gegenüber der Querschnittsfläche A des Verbrennungsraumes 1 und des aufsteigenden Kanalabschnittes 3 verkleinert. Diese Querschnittsfläche B des Querkanales entspricht im wesentlichen auch der Querschnittsfläche C am Eintritt in den Unterkanal 8. Seine Querschnittsfläche D ist gegenüber der Querschnittsfläche B bzw. C erheblich vergrössert, und zwar zweckmässig um 30 bis 50%. Demgegenüber ist die Querschnittsfläche E des anschliessenden Fallschachtes 9 wiederum beträchtlich reduziert. Diese Querschnittsfläche ist auch kleiner als die Querschnittsfläche B bzw. C. Die starke Erweiterung der Querschnittsfläche D des Unterkanales führt zu einer Verlangsamung und verlängerten Verweildauer der Gasströmung in diesem Bereich, wodurch vermehrt Wärme an die aufströmende Aussenluft abgegeben wird. Die vergrösserten Seitenwände vergrössern auch die Wärmeübergangsflächen. Trotz der Verlangsamung der Gasströmung kommt es hier zu keinen Stauungen, weil die Zugwirkung des günstig verlegten Kamines die Verbrennungsgase in ausreichendem Masse abzieht. Die verstärkte Abkühlung der Verbrennungsgase im Unterkanal 8 verkleinert auch das Gasvolumen, weshalb die Gasströmung auch einen wesentlich reduzierten Fallschacht zulässt. Überraschenderweise hat sich gezeigt, dass am erweiterten Unterkanal mit den vergrösserten Heizflächen eine gesteigerte Wärmeübertragung erreicht wird, dass auf weitere Umlenkungen und Querkanäle im abwärtsführenden Kanalteil verzichtet werden kann.

Um eine stets ansteigende und damit zugfördernde Verlegung eines Abgaskamines zu gewährleisten, ist der Austrittsstutzen 10 mit seiner Anschlussöffnung 30 gegenüber der Waagrechten nach oben gerichtet, d.h. die Mittelachse 31 dieser Öffnung ist in Richtung Unterkanal 8 geneigt. Auf diese Weise wird verhindert, dass der meist aus einem flexiblen Metallschlauch bestehende Abgaskamin eine die Strömung ungünstig beeinflussende Durchbiegung einnehmen muss. Die Schrägstellung der Öffnung ist dabei so angelegt, dass der ansteigende Abgaskamin am Unterkanal ohne Richtungsänderung vorbeigeführt werden kann.

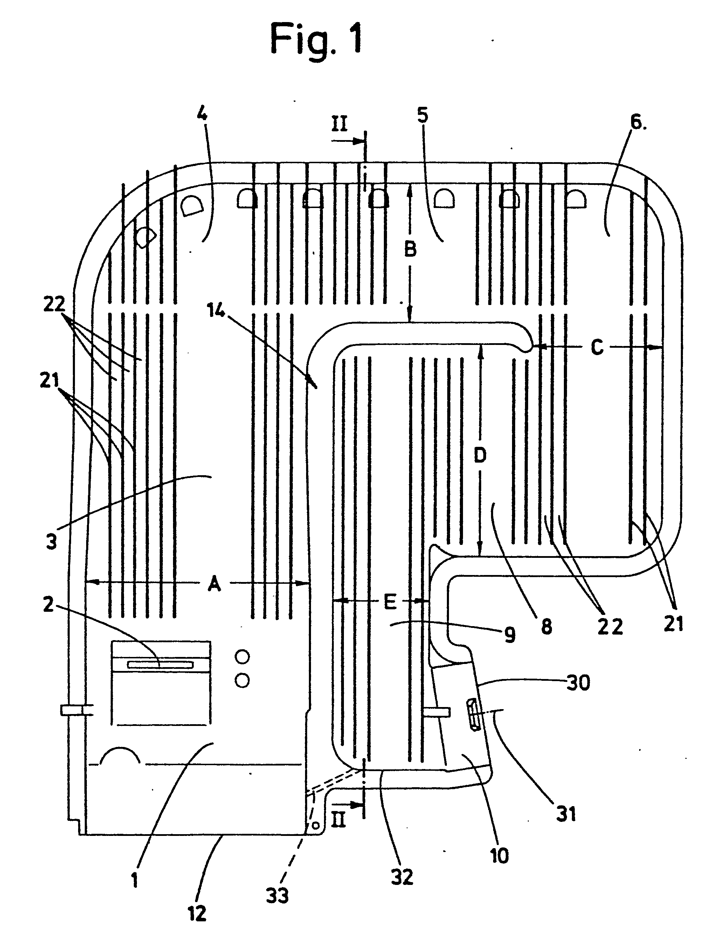

Zur Ableitung des sich auf dem Boden 32 des Fallschachtes 9 sammelnden Kondenswassers ist in einer oder beiden Formschalen ein Kondenswasserkanal 33 so eingeformt, dass er in den Lufteintrittsstutzen 12 einmündet (Fig. 1).

Die Erfindung beschränkt sich nicht auf das dargestellte Ausführungsbeispiel; denn die Erweiterung der Querschnittsfläche D des Unterkanales kann auch an einem Heizgerät, bei dem die Seitenwände nicht abgeflacht, sondern mehr oder weniger rohrförmig gewölbt sind und auch nicht in einer Ebene liegen, vorgenommen sein. Auch wenn hinsichtlich einer günstigen Ausnützung des Bauraumes die dargestellte mäanderförmige, eckige Kanalführung Vorteile aufweist, so lassen sich Querkanal, Unterkanal und Fallschacht auch durch einen Rundbogen miteinander verbinden. Auch der Fallschacht selbst könnte von einem zum Austrittsstutzen führenden Rundbogen ersetzt sein.

**Patentansprüche**

1. Mit gasförmigem oder vergastem flüssigem Brennstoff befeuertes Raumheizgerät für Kleinräume, insbesondere für Wohnwagen, mit gegen den zu beheizenden Raum abgeschlossenem Verbrennungsraum (1), an den sich ein als Wärmetauscher ausgebildeter Verbrennungsgaskanal (3) anschliesst, der vom Verbrennungsraum aufwärts führt, in einen waagrechten Querkanal (5) übergeht und mit einem mäanderförmigen, abwärtsführenden Kanalteil (6, 9) endet, der mindestens einen zum Querkanal (5) etwa parallel verlaufenden Unterkanal (8) aufweist und an dessen Ende ein Austrittsstutzen (10) ausgebildet ist, dadurch gekennzeichnet, dass die Querschnittsfläche (D) des Unterkanales (8) gegenüber den Querschnittsflächen (B, C, E) des Querkanals (5) sowie des mäanderförmigen abwärtsführenden Kanalteiles (6, 9) erheblich vergrössert ist.

2. Heizgerät nach Anspruch 1, dadurch gekennzeichnet, dass sich an einen einzigen Unterkanal (8) direkt ein Fallschacht (9) mit dem Austrittsstutzen (10) anschliesst.

3. Heizgerät nach Anspruch 2, dadurch gekennzeichnet, dass der Fallschacht (9) eine kleinere Querschnittsfläche (E) als der Querkanal (5) aufweist.

4. Heizgerät nach einem der Ansprüche 1 bis 3, dadurch gekennzeichnet, dass der Unterkanal (8) auf seiner ganzen Länge etwa gleiche Querschnittsform aufweist.

5. Heizgerät nach einem der Ansprüche 1 bis 4, dadurch gekennzeichnet, dass zumindest die Seitenwände (20) des Querkanales und des abwärtsführenden Kanalteiles in bekannter Weise angeflacht und beiderseits des Kanales in einer Ebene liegen.

6. Heizgerät nach einem der Ansprüche 1 bis 5, dadurch gekennzeichnet, dass die aneinander angrenzenden Kanalteile über wärmeleitende Zwischenstege (14) in Verbindung stehen.

7. Heizgerät nach Anspruch 6, dadurch gekennzeichnet, dass die Zwischenstege (14) von Flanschfortsätzen (17, 18) zweier Formschalen (15, 16) gebildet sind.

## Revendications

1. Appareil de chauffage fonctionnant avec un combustible gazeux ou liquide gazéifié et destiné à de petits locaux, en particulier à des caravanes, comportant une chambre de combustion (1) fermée par rapport au local à chauffer, à laquelle fait suite un conduit (3) des gaz de combustion, réalisé sous la forme d'un échangeur de chaleur qui, à partir de la chambre de combustion, se dirige vers le haut, passe dans un conduit transversal (5) horizontal et s'achève par une partie de conduit (6, 9) en forme de méandres qui se dirige vers le bas et présente au moins un conduit inférieur (8) qui s'étend à peu près parallèlement à lui (5) et à l'extrémité duquel est réalisée une tubulure d'échappement (10), caractérisé par le fait que la surface (D) de la section transversale du conduit inférieur (8) est considérablement agrandie par rapport aux superficies (B, C, E) de section transversale du conduit transversal (5), ainsi que de la partie de conduit (6, 9) en forme de méandres qui est dirigée vers le bas.

2. Appareil de chauffage selon la revendication 1, caractérisé par le fait qu'à un conduit inférieur (8) unique fait directement suite un puits de descente (9) comportant la tubulure d'échappement (10).

3. Appareil de chauffage selon la revendication 2, caractérisé par le fait que le puits de descente (9) présente une surface (E) de section transversale plus petite que le conduit transversal (5).

4. Appareil de chauffage selon l'une des revendications 1 à 3, caractérisé par le fait que sur toute sa longueur, le conduit inférieur (8) présente une section transversale de forme pratiquement invariable.

5. Appareil de chauffage selon l'une des revendications 1 à 4, caractérisé par le fait qu'au moins les parois latérales (20) du conduit transversal et de la partie de conduit menant vers le bas sont aplaties de manière connue en soi et se trouvent dans un plan des deux côtés du conduit.

6. Appareil de chauffage selon l'une des revendications 1 à 5, caractérisé par le fait que les parties de conduit voisines les unes des autres communiquent entre elles par au moyen d'éléments intermédiaires (14) conduisant la chaleur.

7. Appareil de chauffage selon la revendication 6, caractérisé par le fait que les intercalaires (14) sont formés par des prolongements (17, 18), formant bride, de deux coquilles moulées (15, 16).

## Claims

1. Space heater for small rooms, especially for caravans, adapted to be fired with a gaseous or gasified liquid fuel, having a combustion chamber (1) which is enclosed relative to the space to be heated and to which connects a combustion gas channel (3) formed as a heat exchanger which is directed upwards from the combustion chamber and passes into a horizontal cross channel (5) and terminates in a meander-shaped downwardly directed channel part (6, 9) which has at least one below-channel (8) extending about parallel to the cross channel (5) and at the end of which channel part (6, 9) and outlet socket (10) is formed, characterized in that the crosssectional area (D) of the below-channel (8) is considerably enlarged with regard to the cross-sectional areas (B, C, E) of the cross channel (5) and of the meander-shaped downwardly directed channel part (6, 9).

2. Space heater according to claim 1, characterized in that a fall shaft (9) with the outlet socket (10) connects directly to a single below-channel (8).

3. Space heater according to claim 2, characterized in that the fall shaft (9) has a smaller crosssectional area (E) than the cross channel (5).

4. Space heater according to one of the claims 1 to 3, characterized in that the below-channel (8) has approximately the same cross-sectional form along its full length.

5. Space heater according to one of the claims 1 to 4, characterized in that at least the side walls (20) of the cross channel and of the downwardly directed channel part are flattened in a known way and are situated on both sides of the channel in one plane.

6. Space heater according to one of the claims 1 to 5, characterized in that the abutting channel parts are connected via heat-conducting intermediate webs (14).

7. Space heater according to claim 6, characterized in that the intermediate webs (14) are formed by flange extensions (17, 18) of two shaped shells (15, 16).

# Fig. 1

# Fig. 2